(19) **Europäisches Patentamt / European Patent Office / Office européen des brevets**

(11) **EP 4 621 905 A1**

(12) **EUROPEAN PATENT APPLICATION**
published in accordance with Art. 153(4) EPC

(43) Date of publication:
**24.09.2025 Bulletin 2025/39**

(21) Application number: **24799849.5**

(22) Date of filing: **07.04.2024**

(51) International Patent Classification (IPC):
**H01M 10/0562** (2010.01)    **H01M 10/056** (2010.01)
**H01M 10/052** (2010.01)

(52) Cooperative Patent Classification (CPC):
Y02E 60/10

(86) International application number:
**PCT/CN2024/086391**

(87) International publication number:
**WO 2024/227391 (07.11.2024 Gazette 2024/45)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.05.2023 CN 202310488124**

(71) Applicant: **Contemporary Amperex Technology
Co., Limited
Ningde, Fujian 352100 (CN)**

(72) Inventors:
• **NING, Ziyang**
  **Ningde, Fujian 352100 (CN)**
• **LIU, Chengyong**
  **Ningde, Fujian 352100 (CN)**
• **HU, Bobing**
  **Ningde, Fujian 352100 (CN)**

(74) Representative: **Kraus & Lederer PartGmbB
Thomas-Wimmer-Ring 15
80539 München (DE)**

(54) **SOLID-STATE ELECTROLYTE MEMBRANE AND PREPARATION METHOD THEREFOR, SOLID-STATE BATTERY AND ELECTRIC DEVICE**

(57)    This application relates to a solid-state electrolyte membrane and a preparation method thereof, a solid-state battery, and an electric apparatus. The solid-state electrolyte membrane includes a solid-state electrolyte material layer and a phase-change toughening agent and a fiber material dispersed in the solid-state electrolyte material layer, where the solid-state electrolyte material layer includes an inorganic ceramic solid-state electrolyte material. The foregoing solid-state electrolyte membrane, through the synergistic effect between the phase-change toughening agent and the fiber material in the solid-state electrolyte material layer, can effectively enhance the mechanical properties of the solid-state electrolyte membrane, particularly its fracture toughness, thereby reducing problems such as dendrites and short circuits caused by fracture.

**EP 4 621 905 A1**

# EP 4 621 905 A1

**Description**

## CROSS-REFERENCE

This application refers to Chinese Patent Application No. 2023104881248, titled "SOLID-STATE ELECTROLYTE MEMBRANE AND PREPARATION METHOD THEREOF, SOLID-STATE BATTERY, AND ELECTRIC APPARATUS", filed on May 4, 2023, which is incorporated herein by reference in its entirety.

## TECHNICAL FIELD

This application relates to the field of battery technologies, and in particular, to a solid-state electrolyte membrane and a preparation method thereof, a solid-state battery, and an electric apparatus.

## BACKGROUND TECHNOLOGY

In recent years, with the increasingly wide use of batteries, batteries have been widely used in energy storage power supply systems such as hydroelectric, thermal, wind, and solar power plants, as well as many other fields including electric tools, electric bicycles, electric motorcycles, electric vehicles, military equipment, and aerospace. With the progress of battery research, solid-state batteries have emerged and have been regarded in recent years as batteries capable of succeeding lithium-ion batteries. Solid-state lithium battery technology replaces liquid electrolytes with solid-state electrolytes, which can significantly enhance the energy density of lithium batteries.

Currently, solid-state electrolytes can be classified into polymer solid-state electrolytes and inorganic ceramic solid-state electrolytes. Compared to polymer solid-state electrolytes, the fragile mechanical properties of inorganic ceramic solid-state electrolytes represent a core bottleneck in the application of this type of solid-state electrolyte.

## SUMMARY OF THE INVENTION

In view of this, this application provides a solid-state electrolyte membrane and a preparation method thereof, a solid-state battery, and an electric apparatus. The solid-state electrolyte membrane exhibits good mechanical properties.

According to a first aspect, this application provides a solid-state electrolyte membrane, including a solid-state electrolyte material layer and a phase-change toughening agent and a fiber material dispersed in the solid-state electrolyte material layer, where the solid-state electrolyte material layer includes an inorganic ceramic solid-state electrolyte material.

The foregoing solid-state electrolyte membrane, through the synergistic effect between the phase-change toughening agent and the fiber material in the solid-state electrolyte material layer, can effectively enhance the mechanical properties of the solid-state electrolyte membrane, particularly its fracture toughness, thereby reducing problems such as dendrites and short circuits caused by fracture of the solid-state electrolyte membrane.

In one embodiment, the phase-change toughening agent includes metastable $ZrO_2$; optionally, the phase-change toughening agent includes one or more of yttria-stabilized zirconia (YSZ), scandia-stabilized zirconia (SSZ), magnesia-stabilized zirconia (MSZ), calcia-stabilized zirconia (CSZ), and ceria-stabilized zirconia (CsSZ).

In one embodiment, the fiber material includes ceramic fibers; optionally, the fiber material includes one or more of silicon carbide fibers, silicon nitride fibers, boron nitride fibers, alumina fibers, and silica fibers.

In one embodiment, a total volume of the phase-change toughening agent and the fiber material accounts for a volume percentage of 5% to 20% in the solid-state electrolyte material layer; optionally, the volume percentage is 8% to 12%.

In one embodiment, a volume ratio of the phase-change toughening agent to the fiber material is 1:(0.25 to 4); optionally, the volume ratio is 1:(0.5 to 1.5).

In one embodiment, $D_{50}$ of the phase-change toughening agent is 50 nm to 100 nm.

In one embodiment, the fiber material has a diameter of 0.5 $\mu$m to 5 $\mu$m and a length of 10 $\mu$m to 30 $\mu$m.

In one embodiment, the inorganic ceramic solid-state electrolyte material includes a lithium-ion solid-state electrolyte material, a sodium-ion solid-state electrolyte material, or a potassium-ion solid-state electrolyte material.

In one embodiment, the solid-state electrolyte membrane has one or more of the following characteristics shown in (1) to (2):

(1) a fracture toughness of the solid-state electrolyte membrane is greater than or equal to 0.25 MPa·m$^{1/2}$; optionally, the fracture toughness of the solid-state electrolyte membrane is greater than or equal to 1.5 MPa·m$^{1/2}$; and

(2) a critical current density of the solid-state electrolyte membrane is greater than or equal to 1.5 mA/cm$^2$; optionally, the critical current density of the solid-state electrolyte membrane is greater than or equal to 2 mA/cm$^2$.

In a second aspect of this application, a method for preparing the solid-state electrolyte membrane described in the first aspect is provided, including the following steps:

mixing the inorganic ceramic solid-state electrolyte material, the phase-change toughening agent, and the fiber material to prepare a mixture; and

subjecting the mixture to a forming treatment to prepare the solid-state electrolyte membrane.

The preparation method of the foregoing solid-state electrolyte membrane has simple steps and is conducive to industrial promotion and application.

In one embodiment, the mixing is dry mixing.

In one embodiment, the forming treatment is a pressing treatment; optionally, the pressure of the pressing treatment is 300 MPa to 600 MPa.

In one embodiment, the mixing is wet mixing.

In one embodiment, steps of the forming treatment include coating the mixture into a film and drying; optionally, the solvent used in the wet mixing includes one or more of toluene, p-xylene, o-xylene, m-xylene, trimethylbenzene, ethyl acetate, butyl butyrate, n-butyl ether, anisole, ethylene glycol dimethyl ether, ethylene glycol diethyl ether, and n-butane.

According to a third aspect, this application provides a solid-state battery, including the solid-state electrolyte membrane described in the first aspect.

According to a fourth aspect, this application provides an electric apparatus, including the solid-state battery described in the third aspect.

**DESCRIPTION OF DRAWINGS**

To describe the technical solutions in some embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts. In the drawings:

FIG. 1 is a schematic diagram of a solid-state battery according to an embodiment of this application;
FIG. 2 is a schematic diagram of a battery module according to an embodiment of this application;
FIG. 3 is a schematic diagram of a battery pack according to an embodiment of this application;
FIG. 4 is an exploded view of the battery pack according to an embodiment of this application shown in Figure 3;
FIG. 5 is a schematic diagram of an electric apparatus using a solid-state battery as a power source according to an embodiment of this application; and
FIG. 6 is a cross-sectional scanning electron microscope image of a solid-state electrolyte membrane prepared according to an embodiment of this application.

Reference signs:

1: battery pack; 2: upper box body; 3: lower box body; 4: battery module; 5: solid-state battery; and 6: electric apparatus.

**DESCRIPTION OF EMBODIMENTS**

The following specifically discloses embodiments of a solid-state electrolyte membrane and a preparation method thereof, a solid-state battery, and an electric apparatus in this application with appropriate reference to detailed descriptions of accompanying drawings. However, there may be cases in which unnecessary detailed descriptions are omitted. For example, detailed descriptions of well-known matters or repetitive descriptions of actually identical structures have been omitted. This is to prevent the following descriptions from becoming unnecessarily cumbersome, facilitating understanding of persons skilled in the art. In addition, the accompanying drawings and the following descriptions are provided for persons skilled in the art to fully understand this application and are not intended to limit the subject described in the claims.

"Ranges" disclosed in this application are defined in the form of lower and upper limits. A given range is defined by one lower limit and one upper limit selected, where the selected lower and upper limits define boundaries of that special range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum limit values of a range are given as 1 and 2, and maximum limit values of the range are given as 3, 4, and 5, the following ranges can all be envisioned: 1-3, 1-4, 1-5, 2-3, 2-4, and 2-5. In this application, unless otherwise specified, a value range of "a-b" is a short representation of any combination of real numbers between a and b, where both a and b are real numbers. For example, a value range of "0-5" means that all real numbers in the range of "0-5" are listed herein and "0-5" is just a short representation of combinations of these values. In addition, when a parameter is expressed as an integer greater than or equal to 2, this is equivalent to disclosure that the parameter is, for example, an integer: 2, 3, 4, 5, 6, 7, 8, 9, 10, 11, or 12.

Unless otherwise stated, all the embodiments and optional embodiments of this application can be combined with each other to form new technical solutions.

Unless otherwise stated, all the technical features and optional technical features of this application can be combined with each other to form new technical solutions.

Unless otherwise specified, all steps of this application may be performed sequentially or randomly, and in some examples, they are performed sequentially. For example, a method including steps (a) and (b) indicates that the method may include steps (a) and (b) performed sequentially or may include steps (b) and (a) performed sequentially. For example, the foregoing method may further include step (c), indicating that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application is inclusive or may be exclusive. For example, the terms "include" and "contain" can mean that other unlisted components may also be included or contained, or only listed components may be included or contained.

Unless otherwise stated, in this application, the term "or" is inclusive. For example, a phrase "A or B" means "A, B, or both A and B". More specifically, any one of the following conditions satisfies the condition "A or B": A is true (or present) and B is false (or not present); A is false (or not present) and B is true (or present); or both A and B are true (or present).

In this application, the definition and testing method of fracture toughness are as follows:

Definition: Fracture toughness is a parameter describing the ability of a material to absorb strain energy before fracture occurs. Higher fracture toughness indicates a stronger resistance to crack propagation. Here, it also reflects the resistance of the solid-state electrolyte membrane to cracking and short circuits caused by dendrites. Fracture toughness can be tested by methods such as four-point bending tests and Vickers indentation tests. In this application, the fracture toughness is obtained by selecting the Vickers indentation test.

Testing method: The prepared solid-state electrolyte membrane is polished on a surface of a solid-state electrolyte sheet with sandpaper in an argon atmosphere, progressing from 800 grit to 2000 grit, 4000 grit, and 8000 grit, until an electrolyte surface exhibits mirror-like properties without obvious defects. Subsequently, a Vickers indentation tester is used to perform indentation tests on a polished surface. An appropriate load is applied to drive an indentation tester until radial cracks appear at four corners of the conical indentation. Based on an indentation load P, an extension length C of the radial cracks, a Young's modulus E, and a microhardness HV, the fracture toughness value $K_{IC}$ can be calculated using the formula below:

$$K_{IC} = 0.016 \left(\frac{E}{H_V}\right)^{\frac{1}{2}} \left(\frac{P}{C^{\frac{3}{2}}}\right) (MPa \cdot \sqrt{m})$$

In this application, the definition and testing method of critical current density are as follows:

Definition: Critical current density refers to the minimum current density at which electrochemical deposition occurs when the solid-state electrolyte membrane is paired with a corresponding alkali metal electrode, leading to dendrites and short circuits. That is, when electrochemical deposition occurs at a current density below the critical current density, dendrites and short circuits do not occur in the solid-state electrolyte membrane. Critical current density is a core indicator of the ability of the solid-state electrolyte membrane to suppress dendrites and short circuits.

Testing method: The critical current density of the solid-state electrolyte membrane is measured using the traditional symmetrical cell step-wise increasing current density cycling method. Taking a lithium-ion solid-state electrolyte as an example, the prepared solid-state electrolyte membrane is taken. Two 8-millimeter (mm) diameter and 50-micrometer ($\mu$m) thick lithium metal discs are placed symmetrically at the center on two sides of the electrolyte. Mechanical pressure is applied to ensure tight contact between the lithium metal and the electrolyte sheet, forming a lithium/solid-state electrolyte/lithium symmetrical cell. After assembling and sealing the symmetrical cell, the lithium/solid-state electrolyte/lithium symmetrical cell starts at 0.25 milliamperes per square centimeter ($mA/cm^2$), with 1 milliampere-hours per square centimeter ($mAh/cm^2$) of lithium deposited and stripped sequentially on one side, then the current is increased to 0.5 $mA/cm^2$, maintaining 1 $mAh/cm^2$ areal capacity for deposition and stripping, followed by 0.75

$mA/cm^2$, 1.0 $mA/cm^2$, 1.25 $mA/cm^2$, and so on, up to 10 $mA/cm^2$. The current density at which the voltage suddenly drops significantly is recorded as the critical current density.

Currently, due to the fragile mechanical properties of inorganic ceramic solid-state electrolytes, they are easily to fracture and easily generate dendrites and short circuits during deposition on a negative electrode side. In traditional methods, fibers are introduced into the solid-state electrolyte to enhance the mechanical properties of the solid-state electrolyte membrane, thereby reducing dendrites and short circuits caused by cracking. However, this method is limited in the improvement in mechanical properties.

In view of this, some examples of this application provide a solid-state electrolyte membrane, including a solid-state electrolyte material layer and a phase-change toughening agent and a fiber material dispersed in the solid-state electrolyte material layer, where the solid-state electrolyte material layer includes an inorganic ceramic solid-state electrolyte material.

The foregoing solid-state electrolyte membrane disperses the phase-change toughening agent and the fiber material in the solid-state electrolyte material layer, the synergistic effect exists between the phase-change toughening agent and the fiber material , forming an internal structure similar to "reinforced concrete", which can effectively enhance the mechanical properties of the solid-state electrolyte membrane, particularly its fracture toughness, thereby reducing problems such as dendrites and short circuits caused by fracture.

In addition, during the research process, it was found that when defects and dendrites occur in this solid-state electrolyte, the tensile stress caused by local expansion also induces an in-situ phase transformation in the surrounding phase-change toughening agent, generating compressive stress to further reduce the formation of defects and dendrites. This simultaneously improves the mechanical properties of the solid-state electrolyte membrane and significantly increases the critical current density of the solid-state electrolyte.

Furthermore, by reasonably selecting the types of the phase-change toughening agent and the fiber material, the synergistic effect of phase-change toughening and fiber toughening can be maximized, thereby achieving higher fracture toughness and critical current density.

In some embodiments, the phase-change toughening agent includes metastable $ZrO_2$. Furthermore, the phase-change toughening agent includes one or more of yttria-stabilized zirconia (YSZ), scandia-stabilized zirconia (SSZ), magnesia-stabilized zirconia (MSZ), calcia-stabilized zirconia (CSZ), and ceria-stabilized zirconia (CsSZ). Even further, the phase-change toughening agent includes yttria-stabilized zirconia (YSZ). By reasonably selecting the type of phase-change toughening agent, higher fracture toughness and critical current density can be achieved.

In some embodiments, the fiber material includes ceramic fibers. In addition to optimizing fracture toughness and critical current density, ceramic fibers themselves do not have ion conductivity, which also reduces the phenomenon of fiber-induced deposition seen in traditional methods. Furthermore, the fiber material includes one or more of silicon carbide fibers, silicon nitride fibers, boron nitride fibers, alumina fibers, and silica fibers. Even further, the fiber material includes one or more of silicon carbide fibers, silicon nitride fibers, alumina fibers, and silica fibers. By reasonably selecting the type of fiber material, higher fracture toughness and critical current density can be achieved.

Furthermore, by reasonably selecting a total volume percentage of the phase-change toughening agent and the fiber material in the solid-state electrolyte material layer, the influence of the phase-change toughening agent and the fiber material on ion conduction percolation in the solid-state electrolyte material can be controlled, thereby achieving a better improvement in fracture toughness while also enhancing critical current density.

In some embodiments, the total volume of the phase-change toughening agent and the fiber material accounts for a volume percentage of 5% to 20% in the solid-state electrolyte material layer. Specifically, the volume percentage includes, but is not limited to: 5%, 6%, 7%, 8%, 9%, 10%, 11%, 12%, 13%, 14%, 15%, 16%, 17%, 18%, 19%, or 20%, or falls within a range between any two of these values. Furthermore, the volume percentage is 8% to 12%.

Furthermore, by reasonably selecting a volume ratio of the phase-change toughening agent to the fiber material, a better level of fracture toughness and critical current density can be achieved.

In some embodiments, the volume ratio of the phase-change toughening agent to the fiber material is 1:(0.25 to 4). Specifically, the volume ratio includes, but is not limited to: 1:0.25, 1:0.5, 1:0.8, 1:1, 1:1.2, 1:1.5, 1:2, 1:3, 1:35, or 4, or falls within a range between any two of these values. Furthermore, the volume ratio is 1:(0.5 to 1.5).

Furthermore, by reasonably selecting the proportions and sizes of the phase-change toughening agent and the fiber material, a multi-scale structure for toughening and dendrite suppression can be formed, achieving a better level of fracture toughness and critical current density.

In some embodiments, $D_{50}$ of the phase-change toughening agent is 50 nanometers (nm) to 100 nm. Specifically, $D_{50}$ of the phase-change toughening agent includes, but is not limited to: 50 nm, 55 nm, 60 nm, 65 nm, 70 nm, 75 nm, 80 nm, 85 nm, 90 nm, 95 nm, or 100 nm, or falls within a range between any two of these values.

In some embodiments, the fiber material has a diameter of 0.5 micrometer ($\mu$m) to 5 $\mu$m and a length of 10 $\mu$m to 30 $\mu$m. Specifically, the diameter of the fiber material includes, but is not limited to: 0.5 $\mu$m, 1 $\mu$m, 1.5 $\mu$m, 2 $\mu$m, 2.5 $\mu$m, 3 $\mu$m, 3.5 $\mu$m, 4 $\mu$m, 4.5 $\mu$m, or 5 $\mu$m, or falls within a range between any two of these values. The length of the fiber material includes, but is not limited to: 10 μm, 15 μm, 20 μm, 25 μm, or 30 μm, or falls within a range between any two of these values. Furthermore, the fiber material has a diameter of 0.5 μm to 3 μm and a length of 15 μm to 30 μm.

In some embodiments, the inorganic ceramic solid-state electrolyte material includes a lithium-ion solid-state electrolyte material, a sodium-ion solid-state electrolyte material, or a potassium-ion solid-state electrolyte material. Furthermore, the inorganic ceramic solid-state electrolyte material includes a sulfide-based solid-state electrolyte material.

Without limitation, the lithium-ion solid-state electrolyte includes one or more of LISICON-type solid-state electrolyte, NASICON-type lithium-ion solid-state electrolyte, Garnet-type solid-state electrolyte, LIPON-type solid-state electrolyte, Perovskite-type solid-state electrolyte, Anti-Perovskite-type lithium-ion solid-state electrolyte, Thio-LiSICON-type solid-state electrolyte, $Li_{10}GeP_2S_{12}$-type solid-state electrolyte, $(100-e)Li_2S \cdot e(F2) \cdot f(G2)$-type solid-state electrolyte, Argyrodite-type solid-state electrolyte, Halide-type solid-state electrolyte, and Hydride-type lithium-ion solid-state electrolyte; where in the $(100-e)Li_2S \cdot e(F2) \cdot f(G2)$-type solid-state electrolyte, $20 \leq e \leq 30$, $0 \leq f \leq 50$, F2 includes one or more of $B_2S_3$, $Al_2S_3$, $In_2S_3$, $SiS_2$, $GeS_2$, $SnS_2$, $P_2S_5$, $As_2S_3$, $Sb_2S_5$, $Bi_2S_3$, $WS_2$, and $MoS_2$, and G2 includes one or more of $B_2O_3$, $Al_2O_3$, $In_2O_3$, $SiO_2$, $GeO_2$, $SnO_2$, $P_2O_5$, $Sb_2O_5$, $Bi_2O_3$, $WO_2$, $WO_3$, $MoO_2$, $MoO_3$, $Fe_2O_3$, ZnO, MgO, CuO, CaO, LiN, $Li_2O$, LiF, LiCl, LiBr, and LiI.

The sodium-ion solid-state electrolyte includes one or more of NASICON-type sodium-ion solid-state electrolyte, Na-β-Alumina-type solid-state electrolyte, $Na_3PS_4$-type solid-state electrolyte, $Na_{11}Sn_2PS_{12}$-type solid-state electrolyte, Anti-Perovskite-type solid-state electrolyte, and Hydride-type sodium-ion solid-state electrolyte.

The potassium-ion solid-state electrolyte includes one or more of β-Alumina-type potassium-ion solid-state electrolyte, Anti-Perovskite-type potassium-ion solid-state electrolyte, $K_2Fe_4O_7$-type solid-state electrolyte, and $KSi_2P_3$-type solid-state electrolyte.

As an example, the Garnet-type solid-state electrolyte includes $Li_{7-a}La_3Zr_{2-a}(A2)_aO_{12}$; where $0 \leq a < 1$, and A2 includes one or more of Sb, Nb, Ta, Te, and W.

The Thio-LiSICON-type solid-state electrolyte includes $Li_{3+b}(B2)_c(C2)_{1-c}(D2)_{4-d}(E2)_d$; where $-1 < b < 2$, $0 \leq c \leq 1$, $0 \leq d \leq 2$; B2 includes one or more of B, Al, In, Si, Ge, Sn, Ti, W, and Mo; C2 includes one or more of P, As, Sb, and Bi; D2 includes one or more of S and Se; and E2 includes one or more of F, Cl, Br, and I.

The Argyrodite-type solid-state electrolyte includes $Li_{6+g}(H2)_h(I2)_{1-h}(J2)_{5-i}(K2)_{1+i}$; where $-1 \leq g \leq 1$, $0 \leq h \leq 1$, $-1 < i \leq 1$; H2 includes one or more of B, Al, In, Si, Ge, Sn, Ti, W, and Mo; I2 includes one or more of P, As, Sb, and Bi; J2 represents one or more of S and Se; and K2 includes one or more of F, Cl, Br, and I.

The LISICON-type solid-state electrolyte includes $\gamma$-$Li_3PO_4$.

The NASICON-type lithium-ion solid-state electrolyte includes $Li_{1+j}(L2)_j(M2)_{2-j}(PO_4)_3$, where $0 \leq j < 1$; L2 includes one or more of Al, Cr, Ba, Fe, Sc, In, Lu, Y, and La; and M2 includes one or more of Ti and Ge.

The Perovskite-type solid-state electrolyte includes $Li_{3k}(N2)_{2/3-k}(Q2)O_3$, where $0.04 < k < 0.17$; N2 includes one or more of La, Sr, Ba, and Nd; and Q2 includes one or more of Al, Ti, and Ge.

The Anti-Perovskite-type lithium-ion solid-state electrolyte includes $Li_3OCl$.

The $Li_{10}GeP_2S_{12}$-type solid-state electrolyte includes $Li_{10+1}(R2)_{1+m}(S2)_{2-m}(T2)_{12-n}(U2)_n$, where $-2 < 1 < 2$, $0 \leq m \leq 2$, $0 \leq n \leq 2$; R2 includes one or more of B, Al, In, Si, Ge, Sn, Ti, W, and Mo; S2 includes one or more of P, As, Sb, and Bi; T2 includes one or more of S and Se; and U2 includes one or more of F, Cl, Br, and I.

The Halide-type solid-state electrolyte includes one or more of $Li_3(V2)(W2)_6$ and $Li_2Sc_{2/3}(W2)_4$; where V2 includes one or more of Y, Er, In, Sc, and Ga; and W2 includes one or more of F, Cl, Br, and I.

The Hydride-type lithium-ion solid-state electrolyte includes one or more of $LiBH_4$ and $pLi(CB_9H_{10}) \cdot (1-p)Li(CB_{11}H_{12})$; where $0 < p < 1$.

The LIPON-type solid-state electrolyte includes $Li_xPO_yN_z$, and the like; where $(2y+3z-x=5, x \geq 1, y \geq 1, z \geq 0)$.

The NASICON-type sodium-ion solid-state electrolyte includes $Na_{1+t+2u}Zr_{2-u}(A3)_uP_{3-t}Si_tO_{12}$; where $0 \leq t \leq 3$, $0 \leq u \leq 1$; and A3 includes one or more of Zn, Mg, and Ca.

The Na-β-Alumina-type solid-state electrolyte includes one or more of $Na_2O \cdot (5-7)Al_2O_3$ and $Na_2O \cdot (8-11)Al_2O_3$.

The $Na_3PS_4$-type solid-state electrolyte includes $Na_{3+x}(B3)_v(C3)_{1-v}(D3)_{4-w}(E3)_w$, where $-1 < x < 2$, $0 \leq v \leq 1$, $0 \leq w \leq 2$; B3 includes one or more of B, Al, In, Si, Ge, Sn, Ti, W, and Mo; C3 includes one or more of P, As, Sb, and Bi; D3 includes one or more of S and Se; and E3 represents one or more of F, Cl, Br, and I.

The $Na_{11}Sn_2PS_{12}$-type solid-state electrolyte includes $Na_{11+(x1)}(F3)_{2-y}(G3)_{1+y}(H3)_{12-z}(13)_z$, where $-1 < x1 < 1$, $0 \leq y \leq 2$, $0 \leq z \leq 2$; F3 includes one or more of B, Al, In, Si, Ge, Sn, Ti, W, and Mo; G3 includes one or more of P, As, Sb, and Bi; H3 includes one or more of S and Se; and J3 includes one or more of F, Cl, Br, and I.

The Anti-Perovskite-type solid-state electrolyte includes $Na_3O(K3)$, where K3 includes one or more of Cl, Br, I, and $BH_4$.

The Hydride-type sodium-ion solid-state electrolyte includes $Na_2C_{(b1)}B_{(a1)-(b1)}H_{(b1)}$ and $Na(BH_4)_{0.5}(NH_2)_{0.5}$, and the like, where a1=10 or 12, b1=0 or 1.

The β-Alumina-type potassium-ion solid-state electrolyte includes $K_2O \cdot (8-11)Al_2O_3$.

The Anti-Perovskite-type potassium-ion solid-state electrolyte includes $K_3OI$.

The $K_2Fe_4O_7$-type solid-state electrolyte includes $K_2Fe_4O_7$.

The $KSi_2P_3$-type solid-state electrolyte includes $KSi_2P_3$.

Furthermore, through the foregoing membrane design, the fracture toughness of the solid-state electrolyte membrane can be effectively improved. In some embodiments, the fracture toughness of the solid-state electrolyte membrane is greater than or equal to 0.25 MPa·m$^{1/2}$. Furthermore, the fracture toughness of the solid-state electrolyte membrane is greater than or equal to 1.5 MPa·m$^{1/2}$. Specifically, the fracture toughness of the solid-state electrolyte membrane includes, but is not limited to: 1.67 MPa·m$^{1/2}$, 2.17 MPa·m$^{1/2}$, 2.37 MPa·m$^{1/2}$, 2.79 MPa·m$^{1/2}$, 2.83 MPa·m$^{1/2}$, 2.91 MPa·m$^{1/2}$, 3.02 MPa·m$^{1/2}$, 3.07 MPa·m$^{1/2}$, 3.09 MPa·m$^{1/2}$, 3.11 MPa·m$^{1/2}$, 3.17 MPa·m$^{1/2}$, 3.19 MPa·m$^{1/2}$, 3.23 MPa·m$^{1/2}$, 3.32 MPa·m$^{1/2}$, 3.44 MPa·m$^{1/2}$, 3.69 MPa·m$^{1/2}$, 4.76 MPa·m$^{1/2}$, 5.32 MPa·m$^{1/2}$, and 6.231 MPa·m$^{1/2}$. It is also understandable that fracture toughness is related to the specific type of solid-state electrolyte material. In some examples of this application, for example, when the inorganic ceramic solid-state electrolyte material includes a sulfide-based solid-state electrolyte material, the foregoing performance can be met, whereas when the solid-state electrolyte material is of other types, the fracture toughness may be less than 0.25 MPa·m$^{1/2}$. However, when the same solid-state electrolyte material is used, adopting the solutions of the foregoing examples of this application can improve the fracture toughness of the solid-state electrolyte membrane.

Through the foregoing membrane design, the critical current density of the solid-state electrolyte membrane can be effectively improved. In some embodiments, the critical current density of the solid-state electrolyte membrane is greater than or equal to 1.5 mA/cm$^2$. Furthermore, the critical current density of the solid-state electrolyte membrane is greater than or equal to 2 mA/cm$^2$. Specifically, the critical current density of the solid-state electrolyte membrane includes, but is not limited to: 3.75 mA/cm$^2$, 4.25 mA/cm$^2$, 4.50 mA/cm$^2$, 5.0 mA/cm$^2$, 5.25 mA/cm$^2$, 5.50 mA/cm$^2$, 5.75 mA/cm$^2$, 6.0 mA/cm$^2$, 6.02 mA/cm$^2$, 6.25 mA/cm$^2$, and 7.25 mA/cm$^2$. It is also understandable that the critical current density is related to the specific type of solid-state electrolyte material. In some examples of this application, for example, when the inorganic ceramic solid-state electrolyte material includes the sulfide-based solid-state electrolyte material, the foregoing performance can be met, whereas when the solid-state electrolyte material is of other types, the critical current density may be less than 1.5 mA/cm$^2$. However, when the same solid-state electrolyte material is used, adopting the solutions of the foregoing examples of this application can improve the critical current density of the solid-state electrolyte membrane.

Some other examples of this application provide a method for preparing the foregoing solid-state electrolyte membrane, including the following steps:

mixing the inorganic ceramic solid-state electrolyte material, the phase-change toughening agent, and the fiber material to prepare a mixture; and
subjecting the mixture to a forming treatment to prepare the solid-state electrolyte membrane.

The preparation method of the foregoing solid-state electrolyte membrane has simple steps and is conducive to industrial promotion and application.

In some embodiments, the mixing is dry mixing. Furthermore, in coordination with dry mixing, the forming treatment is a pressing treatment. Without limitation, the pressure of the pressing treatment is 300 MPa to 600 MPa.

In some embodiments, the mixing is wet mixing. Furthermore, in coordination with wet mixing, steps of the forming treatment include coating the mixture into a film and drying. Without limitation, the solvent used in the wet mixing includes one or more of toluene, p-xylene, o-xylene, m-xylene, trimethylbenzene, ethyl acetate, butyl butyrate, n-butyl ether, anisole, ethylene glycol dimethyl ether, ethylene glycol diethyl ether, and n-butane.

In addition, the following describes a solid-state battery, a battery module, a battery pack, and an electric apparatus in this application with appropriate reference to the accompanying drawings.

In one embodiment of this application, a solid-state battery is provided.

Generally, the solid-state battery includes a positive electrode plate, a negative electrode plate, and an electrolyte. During a charge and discharge process of the battery, active ions intercalate and deintercalate between the positive electrode plate and the negative electrode plate. The electrolyte conducts ions between the positive electrode plate and the negative electrode plate; and specifically, the electrolyte adopts the foregoing solid-state electrolyte layer.

The positive electrode plate includes a positive electrode current collector and a positive electrode active material layer disposed on at least one surface of the positive electrode current collector, and the positive electrode active material layer includes a positive electrode active material of the first aspect of this application.

As an example, the positive electrode current collector has two opposing surfaces in a thickness direction of the positive electrode current collector, and the positive electrode active material layer is disposed on either one or both of the two opposing surfaces of the positive electrode current collector.

In some embodiments, the positive electrode current collector may be a metal foil or a composite current collector. For example, as a metal foil, an aluminum foil may be used. The composite current collector may include a polymer material substrate and a metal layer formed on at least one surface of the polymer material substrate. The composite current collector may be formed by forming a metal material (aluminum, aluminum alloy, nickel, nickel alloy, titanium, titanium alloy, silver, silver alloy, and the like) on a polymer material substrate (for example, materials of polypropylene (PP), polyethylene terephthalate (PET), polybutylene terephthalate (PBT), polystyrene (PS), polyethylene (PE), and the like).

In some embodiments, the positive electrode active material may be a positive electrode active material known in the art for use in batteries. As an example, the positive electrode active material may include at least one of the following materials: olivine-structured lithium-containing phosphates, lithium transition metal oxide, and respective modified compounds thereof. However, this application is not limited to these materials, and may alternatively use other conventional materials that can be used as positive electrode active materials for batteries. One of these positive electrode active materials may be used alone, or two or more of them may be used in combination. Examples of lithium transition metal oxides may include, but are not limited to, at least one of lithium cobalt oxide (for example, $LiCoO_2$), lithium nickel oxide (for example, $LiNiO_2$), lithium manganese oxide (for example, $LiMnO_2$ and $LiMn_2O_4$), lithium nickel cobalt oxide, lithium manganese cobalt oxide, lithium nickel manganese oxide, lithium nickel cobalt manganese oxide (for example, $LiNi_{1/3}Co_{1/3}Mn_{1/3}O_2$ (NCM$_{333}$ for short), $LiNi_{0.5}Co_{0.2}Mn_{0.3}O_2$ (NCM$_{523}$ for short), $LiNi_{0.5}Co_{0.25}Mn_{0.25}O_2$ (NCM$_{211}$ for short), $LiNi_{0.6}Co_{0.2}Mn_{0.2}O_2$ (NCM$_{622}$ for short), $LiNi_{0.8}Co_{0.1}Mn_{0.1}O_2$ (NCM$_{811}$ for short)), lithium nickel cobalt aluminum oxide (for example, $LiNi_{0.85}Co_{0.15}Al_{0.05}O_2$), and modified compounds thereof. Examples of olivine-structured lithium-containing phosphates may include, but are not limited to, at least one of lithium iron phosphate (for example, $LiFePO_4$ (LFP for short)), a composite material of lithium iron phosphate and carbon, lithium manganese phosphate (for example, $LiMnPO_4$), a composite material of lithium manganese phosphate and carbon, lithium manganese iron phosphate, and a composite material of lithium manganese iron phosphate and carbon.

In some embodiments, the positive electrode active material layer further optionally includes a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some embodiments, the positive electrode active material layer further optionally includes a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate may be prepared as follows: the foregoing constituents used for preparing the positive electrode plate, for example, the positive electrode active material, the conductive agent, the binder, and any other constituent, are dispersed in a solvent (for example, N-methylpyrrolidone) to produce a positive electrode slurry; and the positive electrode slurry is applied onto the positive electrode current collector, followed by processes such as drying and cold pressing to obtain the positive electrode plate.

The negative electrode plate includes a negative electrode current collector and a negative electrode active material layer disposed on at least one surface of the negative electrode current collector, and the negative electrode active material layer includes a negative electrode active material.

As an example, the negative electrode current collector has two opposing surfaces in a thickness direction of the negative electrode current collector, and the negative electrode active material layer is disposed on either one or both of the two opposing surfaces of the negative electrode current collector.

In some embodiments, the negative electrode current collector may be a metal foil or a composite current collector. For example, as a metal foil, a copper foil may be used. The composite current collector may include a polymer material substrate and a metal layer formed on at least one surface of the polymer material substrate. The composite current collector may be formed by forming a metal material (copper, copper alloy, nickel, nickel alloy, titanium, titanium alloy, silver, silver alloy, and the like) on a polymer material substrate (for example, materials of polypropylene (PP), polyethylene terephthalate (PET), polybutylene terephthalate (PBT), polystyrene (PS), polyethylene (PE), and the like).

In some embodiments, the negative electrode active material may be a negative electrode active material known in the art for use in batteries. As an example, the negative electrode active material may include at least one of the following materials: lithium metal, lithium-containing alloys, lithium-containing composites, artificial graphite, natural graphite, soft carbon, hard carbon, silicon-based materials, tin-based materials, lithium titanate, and the like. The silicon-based material may be selected from at least one of elemental silicon, silicon-oxygen compounds, silicon-carbon composites, silicon-nitrogen composites, and silicon alloys. The tin-based material may be selected from at least one of elemental tin, tin-oxygen compounds, and tin alloys. However, this application is not limited to these materials, and may alternatively use other conventional materials that can be used as negative electrode active materials for batteries. One of these negative electrode active materials may be used alone, or two or more of them may be used in combination.

In some embodiments, the negative electrode active material includes one or more of lithium metal, lithium-containing alloys, and lithium-containing composites.

In some embodiments, the negative electrode active material layer further optionally includes a binder. The binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofibers.

In some embodiments, the negative electrode active material layer further optionally includes other additives, such as a thickener (for example, sodium carboxymethyl cellulose (CMC-Na)).

In some embodiments, the negative electrode plate may be prepared as follows: the constituents used for preparing the foregoing negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

In some embodiments, the positive electrode plate, negative electrode plate, and solid-state electrolyte membrane may be formed into an electrode assembly through winding or lamination.

In some embodiments, the solid-state battery may include an outer package. The outer package may be used for packaging the foregoing electrode assembly and electrolyte.

In some embodiments, the outer package of the solid-state battery may be a hard shell, for example, a hard plastic shell, aluminum shell, or steel shell. The outer package of the solid-state battery may also be a soft pack, for example, a soft pouch. A material of the soft pack may be plastic. As the plastic, polypropylene, polybutylene terephthalate, polybutylene succinate, and the like may be listed.

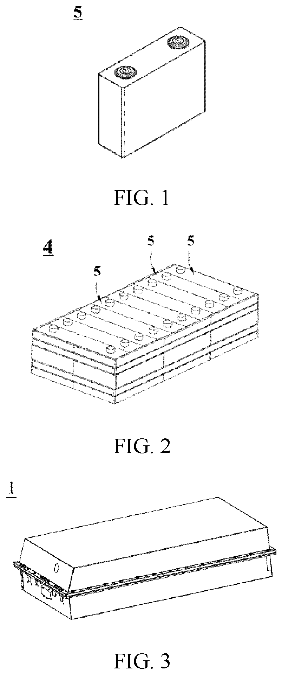

The solid-state battery is not limited to any particular shape in the embodiments of this application, and the solid-state battery may be cylindrical, rectangular, or of any other shapes. For example, FIG. 1 shows a solid-state battery 5 of a rectangular structure as an example.

In some embodiments, the solid-state battery may be assembled into a battery module, and the battery module may include one or more solid-state batteries. A specific quantity may be chosen by persons skilled in the art based on use and capacity of the battery module.

FIG. 2 shows a battery module 4 as an example. Referring to FIG. 2, in the battery module 4, multiple solid-state batteries 5 may be arranged sequentially in a length direction of the battery module 4. Certainly, the batteries may alternatively be arranged in any other manners. Furthermore, the multiple solid-state batteries 5 may be fastened by fasteners.

Optionally, the battery module 4 may further include a housing with an accommodating space, and the multiple solid-state batteries 5 are accommodated in the accommodating space.

In some embodiments, the foregoing battery module may also be assembled into a battery pack, and the battery pack may include one or more battery modules. A specific quantity may be chosen by persons skilled in the art according to use and capacity of the battery pack.

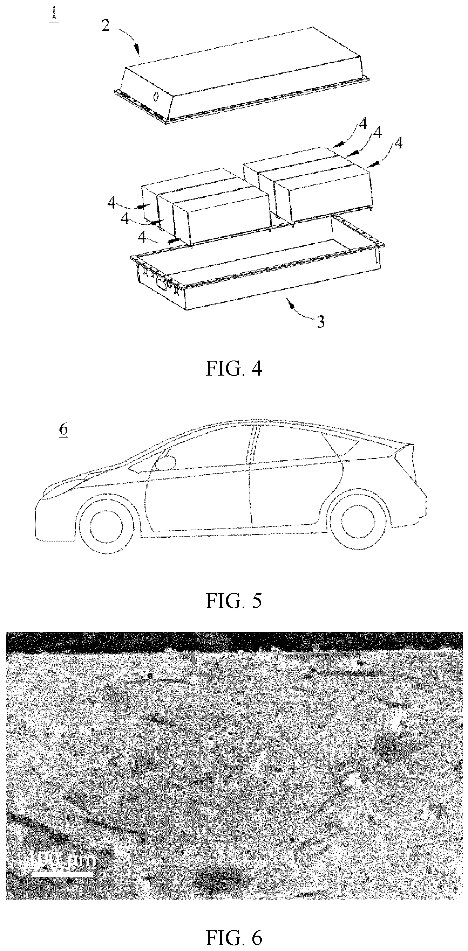

FIG. 3 and FIG. 4 show a battery pack 1 as an example. Referring to FIG. 3 and FIG. 4, the battery pack 1 may include a battery box and multiple battery modules 4 arranged in the battery box. The battery box includes an upper box body 2 and a lower box body 3. The upper box body 2 can cover the lower box body 3 to form an enclosed space for accommodating the battery modules 4. The multiple battery modules 4 may be arranged in the battery box in any manner.

In addition, this application further provides an electric apparatus. The electric apparatus includes at least one of the solid-state battery, battery module, or battery pack provided by this application. The solid-state battery, battery module, or battery pack may be used as a power source for the electric apparatus, or as an energy storage unit for the electric apparatus. The electric apparatus may include a mobile device, an electric vehicle, an electric train, ship, a satellite system, and an energy storage system, and the like, but is not limited thereto. The mobile device may be, for example, a mobile phone or a notebook computer; and the electric vehicle may be, for example, a battery electric vehicle, a hybrid electric vehicle, a plug-in hybrid electric vehicle, an electric bicycle, an electric scooter, an electric golf vehicle, or an electric truck, but is not limited thereto.

The solid-state battery, the battery module, or the battery pack may be selected for the electric apparatus according to requirements for using the electric apparatus.

FIG. 5 shows an electric apparatus 5 as an example. This electric apparatus is a battery electric vehicle, a hybrid electric vehicle, a plug-in hybrid electric vehicle, or the like. To meet a requirement of the electric apparatus for high power and high energy density of the solid-state battery, a battery pack or a battery module may be used.

As another example, the apparatus may be a mobile phone, a tablet computer, or a notebook computer, or the like. Such apparatus is usually required to be light and thin, for which the solid-state battery may be used as a power source.

The following describes embodiments of this application. The examples described below are illustrative and merely used for explaining this application, and cannot be construed as limitations on this application. Examples whose technical solutions or conditions are not specified are made in accordance with technical solutions or conditions described in literature in the field or made in accordance with product instructions. Reagents or instruments used without indicating the manufacturer are conventional products available commercially.

Example 1

(1) YSZ ($D_{50}$=50 nm), $Al_2O_3$ fibers (1 $\mu$m diameter, 20 $\mu$m length), and $Li_6PS_5Cl$ solid-state electrolyte powder were mixed; where a volume ratio of YSZ to $Li_6PS_5Cl$ solid-state electrolyte powder accounted for 5%, and a volume ratio of $SiO_2$ fibers to $Li_6PS_5Cl$ solid-state electrolyte powder accounted for 5%; and
(2) the uniformly mixed composite solid-state electrolyte powder was pressed and formed in a mold at a pressure of 500 MPa.

Specifically, when preparing a solid-state electrolyte membrane for testing, the uniformly mixed composite solid-state electrolyte powder was pressed into a solid-state electrolyte disc with a thickness of 1 mm and a diameter of 5 mm using a 5 mm stainless steel mold at a pressure of 500 MPa. A cross-sectional scanning electron microscope image of the solid-state electrolyte membrane prepared in Example 1 is shown in FIG. 6, and it can be seen that the phase-change toughening agent and fibers form a structure similar to "reinforced concrete".
Examples 2 to 19 and Comparative Examples 1 to 3 were based on Example 1, the type or volume percentage or D50 of the phase-change toughening agent, or the type or volume percentage or diameter*length of the fibers were changed, while the remaining steps were the same as in Example 1, as shown in Table 1.

Table 1

| Example | Solid-state electrolyte | Phase-Change Toughening Agent | Volume percentage | D50 | Fiber | Volume percentage | Diameter*Length | Fracture Toughness (MPa·m$^{1/2}$) | Critical Current Density (mA/cm$^2$) |
|---|---|---|---|---|---|---|---|---|---|
| 1 | $Li_6PS_5Cl$ | YSZ | 5% | 50nm | $Al_2O_3$ | 5% | 1 μm*20 μm | 3.44 | 6.0 |
| 2 | $Na_3PS_4$ | YSZ | 5% | 50nm | $Al_2O_3$ | 5% | 1 μm*20 μm | 4.76 | 7.25 |
| 3 | $KSi_2P_3$ | YSZ | 5% | 50nm | $Al_2O_3$ | 5% | 1 μm*20 μm | 6.23 | 5.25 |
| 4 | $Li_6PS_5Cl$ | SSZ | 5% | 50nm | $Al_2O_3$ | 5% | 1 μm*20 μm | 3.02 | 5.25 |
| 5 | $Li_6PS_5Cl$ | MSZ | 5% | 50nm | $Al_2O_3$ | 5% | 1 μm*20 μm | 3.17 | 5.50 |
| 6 | $Li_6PS_5Cl$ | CsSZ | 5% | 50nm | $Al_2O_3$ | 5% | 1 μm*20 μm | 3.09 | 5.25 |
| 7 | $Li_6PS_5Cl$ | YSZ | 5% | 50nm | $SiO_2$ | 5% | 1 μm*20 μm | 3.19 | 5.5 |
| 8 | $Li_6PS_5Cl$ | YSZ | 5% | 50nm | Boron Nitride | 5% | 1 μm*20 μm | 2.91 | 5.0 |
| 9 | $Li_6PS_5Cl$ | YSZ | 5% | 50nm | Silicon Carbide | 5% | 1 μm*20 μm | 3.32 | 5.75 |
| 10 | $Li_6PS_5Cl$ | YSZ | 5% | 50nm | Silicon Nitride | 5% | 1 μm*20 μm | 3.11 | 5.25 |
| 11 | $Li_6PS_5Cl$ | SSZ | 5% | 50nm | $SiO_2$ | 5% | 1 μm*20 μm | 2.83 | 5.0 |
| 12 | $Li_6PS_5Cl$ | YSZ | 2.5% | 50nm | $Al_2O_3$ | 2.5% | 1 μm*20 μm | 1.67 | 3.75 |
| 13 | $Li_6PS_5Cl$ | YSZ | 10% | 50nm | $Al_2O_3$ | 10% | 1 μm*20 μm | 5.32 | 6.25 |
| 14 | $Li_6PS_5Cl$ | YSZ | 2% | 50nm | $Al_2O_3$ | 2% | 1 μm*20 μm | 2.17 | 4.25 |
| 15 | $Li_6PS_5Cl$ | YSZ | 8% | 50nm | $Al_2O_3$ | 8% | 1μm*20μm | 2.79 | 4.50 |
| 16 | $Li_6PS_5Cl$ | YSZ | 5% | 75nm | $Al_2O_3$ | 5% | 1 μm*20 μm | 3.23 | 5.50 |
| 17 | $Li_6PS_5Cl$ | YSZ | 5% | 100nm | $Al_2O_3$ | 5% | 1 μm*20 μm | 3.07 | 5.25 |
| 18 | $Li_6PS_5Cl$ | YSZ | 5% | 50nm | $Al_2O_3$ | 5% | 0.5 μm*30 μm | 3.69 | 6.25 |
| 19 | $Li_6PS_5Cl$ | YSZ | 5% | 50nm | $Al_2O_3$ | 5% | 5 μm*10 μm | 2.37 | 4.50 |
| Comparative Example 1 | $Li_6PS_5Cl$ | / | / | / | / | / | / | 0.21 | 1.25 |
| Comparative Example 2 | $Li_6PS_5Cl$ | / | / | / | $Al_2O_3$ | 5% | 1 μm*20 μm | 0.74 | 2.5 |
| Comparative Example 3 | $Li_6PS_5Cl$ | YSZ | 5% | 50nm | / | / | / | 1.12 | 2.75 |

It can be seen from Table 1 that compared to the comparative examples, the examples can improve the mechanical properties and critical current density of the solid-state electrolyte membrane by using a combination of a phase-change toughening agent and a fiber material.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other forms constructed by combining some of the constituent elements in the embodiments are also included in the scope of this application.

**Claims**

1. A solid-state electrolyte membrane, comprising a solid-state electrolyte material layer and a phase-change toughening agent and a fiber material dispersed in the solid-state electrolyte material layer, wherein the solid-state electrolyte material layer comprises an inorganic ceramic solid-state electrolyte material.

2. The solid-state electrolyte membrane according to claim 1, wherein the phase-change toughening agent comprises metastable $ZrO_2$; optionally, the phase-change toughening agent comprises one or more of yttria-stabilized zirconia, scandia-stabilized zirconia, magnesia-stabilized zirconia, calcia-stabilized zirconia, and ceria-stabilized zirconia.

3. The solid-state electrolyte membrane according to claim 1 or 2, wherein the fiber material comprises ceramic fibers; optionally, the fiber material comprises one or more of silicon carbide fibers, silicon nitride fibers, boron nitride fibers, alumina fibers, and silica fibers.

4. The solid-state electrolyte membrane according to any one of claims 1 to 3, wherein a total volume of the phase-change toughening agent and the fiber material accounts for a volume percentage of 5% to 20% in the solid-state electrolyte material layer; optionally, the volume percentage is 8% to 12%.

5. The solid-state electrolyte membrane according to any one of claims 1 to 4, wherein a volume ratio of the phase-change toughening agent to the fiber material is 1:(0.25 to 4); optionally, the volume ratio is 1:(0.5 to 1.5).

6. The solid-state electrolyte membrane according to any one of claims 1 to 5, wherein $D_{50}$ of the phase-change toughening agent is 50 nm to 100 nm.

7. The solid-state electrolyte membrane according to any one of claims 1 to 6, wherein the fiber material has a diameter of 0.5 $\mu$m to 5 $\mu$m and a length of 10 $\mu$m to 30 $\mu$m.

8. The solid-state electrolyte membrane according to any one of claims 1 to 7, wherein the inorganic ceramic solid-state electrolyte material comprises a lithium-ion solid-state electrolyte material, a sodium-ion solid-state electrolyte material, or a potassium-ion solid-state electrolyte material.

9. The solid-state electrolyte membrane according to any one of claims 1 to 8, wherein the solid-state electrolyte membrane has one or more of the following characteristics shown in (1) to (2):

   (1) A fracture toughness of the solid-state electrolyte membrane is greater than or equal to 0.25 MPa·m$^{1/2}$; optionally, the fracture toughness of the solid-state electrolyte membrane is greater than or equal to 1.5 MPa·m$^{1/2}$; and
   (2) a critical current density of the solid-state electrolyte membrane is greater than or equal to 1.5 mA/cm$^2$; optionally, the critical current density of the solid-state electrolyte membrane is greater than or equal to 2 mA/cm$^2$.

10. A method for preparing the solid-state electrolyte membrane according to any one of claims 1 to 9, comprising the following steps:

    mixing the inorganic ceramic solid-state electrolyte material, the phase-change toughening agent, and the fiber material to prepare a mixture; and
    subjecting the mixture to a forming treatment to prepare the solid-state electrolyte membrane.

11. The method for preparing the solid-state electrolyte membrane according to claim 10, wherein the mixing is dry mixing.

12. The method for preparing the solid-state electrolyte membrane according to claim 11, wherein the forming treatment is a pressing treatment; optionally, the pressure of the pressing treatment is 300 MPa to 600 MPa.

13. The method for preparing the solid-state electrolyte membrane according to claim 10, wherein the mixing is wet mixing.

14. The method for preparing the solid-state electrolyte membrane according to claim 13, wherein steps of the forming treatment comprise coating the mixture into a film and drying; optionally, the solvent used in the wet mixing comprises one or more of toluene, p-xylene, o-xylene, m-xylene, trimethylbenzene, ethyl acetate, butyl butyrate, n-butyl ether, anisole, ethylene glycol dimethyl ether, ethylene glycol diethyl ether, and n-butane.

15. A solid-state battery, comprising the solid-state electrolyte membrane according to any one of claims 1 to 9.

16. An electric apparatus, comprising the solid-state battery according to claim 15.

FIG. 1

FIG. 2

FIG. 3

FIG. 4

FIG. 5

FIG. 6

## INTERNATIONAL SEARCH REPORT

| International application No. |
| --- |
| **PCT/CN2024/086391** |

| | |
| --- | --- |
| **A.** | **CLASSIFICATION OF SUBJECT MATTER** |

H01M10/0562(2010.01)i; H01M10/056(2010.01)i; H01M10/052(2010.01)i

According to International Patent Classification (IPC) or to both national classification and IPC

| | |
| --- | --- |
| **B.** | **FIELDS SEARCHED** |

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

DWPI; CNTXT; ENTXTC; VCN; WPABSC: 电池, 电解质, 固态, 纤维, 碳化硅, 氮化硅, 氮化硼, 氧化铝, 二氧化硅, 陶瓷, 氧化锆, ZrO2, 稳定, 断裂韧性, battery, electrolyte, solid, fiber, silicon carbide, silicon nitride, boron nitride, alumina, silica, zirconium oxide, stabil+, fracture toughness

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| Y | JP 2014096311 A (NATIONAL INSTITUTE OF ADVANCED INDUSTRIAL & TECHNOLOGY et al.) 22 May 2014 (2014-05-22) description, paragraphs 0002-0092, and figures 1-2 | 1-16 |
| Y | JP 2009104990 A (NIPPON CATALYTIC CHEMICAL INDUSTRIAL) 14 May 2009 (2009-05-14) claims 1-13, and description, paragraphs 1-7 | 1-16 |
| Y | US 2018145363 A1 (FUELCELL ENERGY INC.) 24 May 2018 (2018-05-24) claims 1-20 | 1-16 |
| A | CN 101228099 A (NIPPON SHOKUBAI CO., LTD.) 23 July 2008 (2008-07-23) claims 1-13 | 1-16 |
| A | CN 114464874 A (NANKAI UNIVERSITY) 10 May 2022 (2022-05-10) description, paragraphs 2-28 | 1-16 |
| A | JP 2000292406 A (NGK SPARK PLUG CO., LTD.) 20 October 2000 (2000-10-20) entire document | 1-16 |

☑ Further documents are listed in the continuation of Box C. ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 June 2024** | **04 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/086391**

| C. | DOCUMENTS CONSIDERED TO BE RELEVANT | |
|---|---|---|
| Category* | Citation of document, with indication, where appropriate, of the relevant passages | Relevant to claim No. |
| A | JP H0471165 A (FUJIKURA LTD.) 05 March 1992 (1992-03-05)<br>entire document | 1-16 |

Form PCT/ISA/210 (second sheet) (July 2022)

**INTERNATIONAL SEARCH REPORT**
Information on patent family members

International application No.

**PCT/CN2024/086391**

| Patent document cited in search report | | | Publication date (day/month/year) | Patent family member(s) | | | Publication date (day/month/year) |
|---|---|---|---|---|---|---|---|
| JP | 2014096311 | A | 22 May 2014 | JP | 6206900 | B2 | 04 October 2017 |
| JP | 2009104990 | A | 14 May 2009 | | None | | |
| US | 2018145363 | A1 | 24 May 2018 | WO | 2018093455 | A1 | 24 May 2018 |
| | | | | US | 11205795 | B2 | 21 December 2021 |
| CN | 101228099 | A | 23 July 2008 | WO | 2007013567 | A1 | 01 February 2007 |
| | | | | JP | 2013008684 | A | 10 January 2013 |
| | | | | JP | 5596755 | B2 | 24 September 2014 |
| | | | | JPWO | 2007013567 | A1 | 12 February 2009 |
| | | | | JP | 5145043 | B2 | 13 February 2013 |
| | | | | US | 2009047562 | A1 | 19 February 2009 |
| | | | | EP | 1916228 | A1 | 30 April 2008 |
| | | | | EP | 1916228 | A4 | 01 September 2010 |
| | | | | CN | 101228099 | B | 16 January 2013 |
| CN | 114464874 | A | 10 May 2022 | CN | 114464874 | B | 17 October 2023 |
| JP | 2000292406 | A | 20 October 2000 | JP | 4198855 | B2 | 17 December 2008 |
| JP | H0471165 | A | 05 March 1992 | JP | 2977235 | B2 | 15 November 1999 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104881248